# EUROPEAN PATENT APPLICATION

(11) **EP 1 221 658 A2**
(43) Date of publication of application: **10.07.2002**
(21) Application number: 01129637.3
(22) Date of filing: 12.12.2001
(51) Int. Cl.: G06F 17/30

(54) **Method of displaying hypertext based on a prominence rating**

(30) Priority: 15.12.2000 US 737535
(71) Applicant: Xerox Corporation, Rochester, New York 14644 (US)
(72) Inventor: Simchik, Andrew D., San Bruno, California 94066 (US)
(74) Representative: Grünecker, Kinkeldey, Stockmair & Schwanhäusser Anwaltssozietät

(57) **Abstract**

A method of displaying hypertext is disclosed. The method includes tracking a hypertext access to a document and assigning a prominence rating to the hypertext based on the tracking, wherein the prominence rating is based on frequency of access by a user, and on recency of access by the user. A visual cue of the hypertext is changed on a display according to the prominence rating. An apparatus for displaying hypertext is also disclosed.

## Description

The invention pertains to the art of organizing graphical representations of computer links and, more particularly, to a scheme for altering the visual appearance of hypertext in such a manner as to reflect recency and frequency of use of the hypertext.

When one computer connects to one or more other computers, the user of the computer often accesses information on the other computers. One method of providing such access is through the use of hypertext. Hypertext is text that contains hyperlinks. Hyperlinks are devices used in computers which provide access to documents based on Hypertext Markup Language ('HTML') that are located in other computers or other areas.

For users who visit other computer locations frequently, a method of organizing hypertext is beneficial, because multiple links are often present while only few are used. Changing the color of a previously accessed hypertext link is well known in the art, but a user is still unable to determine which link was most frequently used. U.S. Patent No. 5,446,891 teaches the organization of hypertext in a prioritized list according to frequency of use. At the highest priority is the most frequently used link, with the rest of the links following according to decreasing amount of use. U.S. Patent No. 6,069,625 describes spatial separation of elements on a graphical interface according to frequency of use. Essentially, most frequently accessed elements are placed in one area on the display screen of the computer, while less frequently accessed elements are placed in a separate area.

The present invention contemplates a new method for displaying hypertext for a computer user. The method is based upon a prominence rating which is assigned according to both frequency of use and recency of use of the hypertext, for which parameters can be adjusted by an administrator or a user. Furthermore, the resulting display of hypertext utilizes visual cues which go beyond a priority list or spatial separation.

In accordance with one embodiment of the present invention, a method of displaying hypertext is disclosed. The method includes tracking a hypertext access to a document and assigning a prominence rating to the hypertext based on the tracking, wherein the prominence rating is based on frequency of access by a user, and on recency of access by the user. A visual cue of the hypertext is changed on a display according to the prominence rating.

In accordance with another embodiment of the present invention, a method of displaying hypertext is disclosed. The method includes accessing a set of data stored on a local memory by an Internet server and interpreting the set of data. A prominence rating is assigned to hypertext based on the set of data, wherein the prominence rating is based on frequency of access by a user as shown by the set of data, and on recency of access by the user as shown by the set of data. A visual cue of the hypertext is changed on a display according to the prominence rating.

In accordance with a more limited aspect of the present invention, the step of changing a visual cue of the hypertext on a display includes changing a font size of the hypertext.

In accordance with a more limited aspect of the present invention, the step of changing a visual cue of the hypertext on a display includes changing a font style of the hypertext.

In accordance with a more limited aspect of the present invention, the step of changing a visual cue of the hypertext on a display includes changing a color of the hypertext.

In accordance with a more limited aspect of the present invention, the step of changing a visual cue of the hypertext on a display includes changing a boldness of the hypertext.

In accordance with a more limited aspect of the present invention, the step of changing a visual cue of the hypertext on a display includes changing an underline of the hypertext.

In accordance with a more limited aspect of the present invention, the step of changing a visual cue of the hypertext on a display includes changing an order of the hypertext in a list.

In accordance with a more limited aspect of the present invention, the step of changing a visual cue of the hypertext on a display includes changing a spatial separation of the hypertext.

In accordance with another embodiment of the present invention, an apparatus for displaying hypertext is disclosed.

One advantage of the present invention is that because the prominence rating is based in part on recency of access to a link, current, up-to-date activities are factored in the alteration of the display of the hypertext, thus providing the user with better information which allows the user to be more efficient.

Another advantage of the present invention is that because the prominence rating can be divided into categories, sophisticated groupings in the display of hypertext may be accomplished, providing the user with a more advantageous set-up than a simple priority list, increasing the user's efficiency.

Yet another advantage of the present invention is that the user or a system administrator may control the prominence rating parameters, allowing the user to configure the settings for which hypertext is adjusted, thus creating a flexible and more friendly user interface.

Still another advantage of the present invention is that the hypertext may be adjusted according to many different visual cues instead of only simple priority listing or spatial separation, allowing easier recognition by a user and increasing the user's efficiency.

Still another advantage of the present invention is that the user or a system administrator may control which visual cues are utilized, providing for a more custom-style setup and thus creating a more flexible and friendly user interface.

Still further advantages of the present invention will become apparent to those of ordinary skill in the art upon reading and understanding the following detailed description of the preferred embodiments.

The invention may take form in various components and arrangement of components, and in various steps and arrangements of steps. The drawings are only for purposes of illustrating the preferred embodiments and are not to be construed as limiting the invention.
FIGURE 1 is a block diagram illustration of a system which utilizes the current invention;
FIGURE 2 is a depiction of a computer screen display of the prior art;
FIGURE 3 is a flow chart illustrating the steps of one embodiment of the current invention.
FIGURE 4 is a depiction of the resulting display of one embodiment of the current invention;
FIGURE 5 is a depiction of the resulting display of another embodiment of the current invention;
FIGURE 6 is a depiction of the resulting display of yet another embodiment of the current invention;
FIGURE 7 is a depiction of a prior art computer screen display;
FIGURE 8 is a depiction of the resulting display of still another embodiment of the current invention;
FIGURE 9 is a block diagram illustration of another system which utilizes the current invention; and
FIGURE 10 is a block diagram illustration of yet another system which utilizes the current invention.

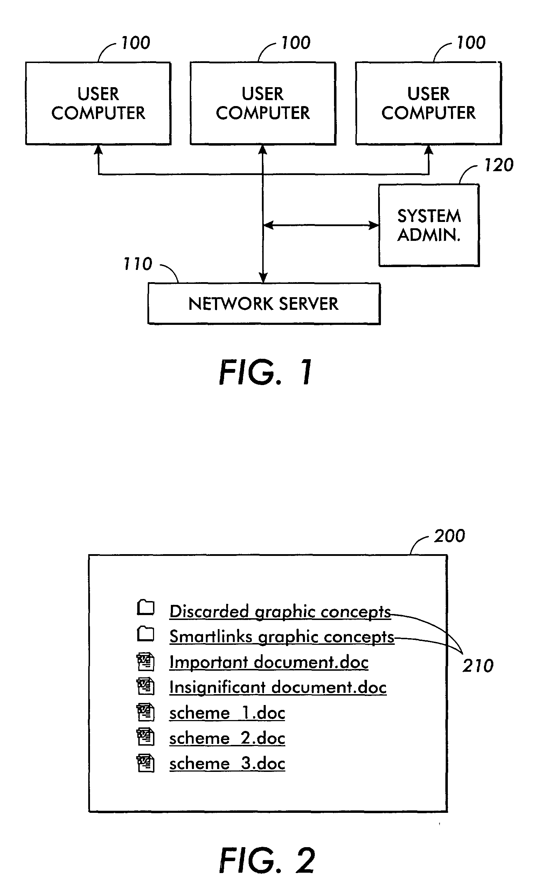

With reference to FIGURE 1, a block diagram illustration of an exemplary computer network or system which utilizes the current invention is shown. When user computers **100** are connected or otherwise networked together, they are often done so in different ways and for different purposes. An example of one method of connection is a multiplicity of user computers **100** connected to a network server **110.** A system administrator **120** typically controls many of the system settings and parameters. When user computers **100** are connected, the users often share documents, pictures, charts, graphs, timelines and other graphics through a document sharing system such as DocuShare by Xerox Corporation.

In order to facilitate the sharing of documents and other items between user computers **100,** hypertext is often utilized. Hypertext is text which denotes a certain document or item and contains a hyperlink to that item. A hyperlink is the programming device which allows one computer user **100** to retrieve the desired document or item from the network server **110.**

Turning now to FIGURE 2, a depiction of a computer screen display of the prior art **200,** most users are faced with many hyperlinks **210** on a single computer display screen. However, a user will typically only access a few hyperlinks of those listed. As a result, it can become time consuming for a user to search for a desired hyperlink on a frequently used computer screen display **200.**

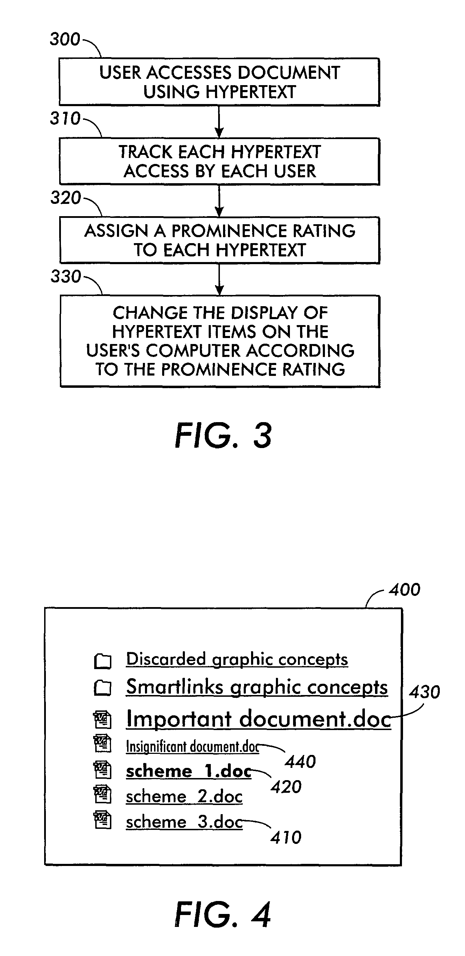

With reference to FIGURE 3, the steps of one embodiment of the current invention are illustrated. A user on a user computer **100** (FIG. 1) accesses a document or other item using hypertext, step **300**. Each access of an item through hypertext is tracked, step **310**. A prominence rating is assigned to each hypertext link based upon the tracking, step **320.** Tracking is accomplished in a conventional manner. For example, it is well known in the art how to track recency of access, as embodied in typical word processing software. In addition, several prior art patents disclose techniques for tracking frequency of access. The display of the hypertext is changed on the user computer **100** according to the prominence rating, step **330.** The prominence rating is based both on frequency of access of the hyperlink by the user and recency of access. Any known technique may be used to assign the rating. For example, a look-up table containing a count of frequency of access of each link, a corresponding date of most recent access and the resulting prominence rating may be used. The user or a system administrator can control these parameters, thus allowing a customized measurement. One embodiment of the invention provides for tracking of access of hypertext as mentioned above by a single user, thus allowing customization according to that user's most frequently and recently accessed links. Another embodiment of the invention provides for tracking of hypertext access by multiple users, typically by a system administration function. In that embodiment, the prominence rating is based upon frequency and recency of access by the entire group of users, thus allowing a display customized to the requirements of the group. Yet another embodiment provides for tracking of access of hypertext by individual users in a multiple computer system, typically by a system administration function. There, a prominence rating is based upon frequency and recency of access by each user, allowing a display to be customized to each individual user within the group.

The current invention also provides for different visual cues based upon different levels of the prominence rating. For example, hypertext which has been accessed frequently and recently may be displayed differently than hypertext which has been accessed frequently but not recently. Likewise, hypertext which has been accessed recently but not frequently may be displayed differently, while a different visual cue may also be used for links not frequently or recently accessed. In addition, different levels of frequency within the same designated recency period may be displayed differently. Because the user or the system administrator can specify the parameters for periods of time to decide recency and groups of frequency of access, a sophisticated display of altered hypertext can be created.

Turning now to FIGURE 4, a depiction of the resulting display **400** of one embodiment of the current invention is shown. A typical hyperlink font style and size **410** may be a part of the resulting display **400.** In this embodiment, hypertext with a higher prominence rating **420** than a hyperlink of the standard type **410** is visually cued by bold typeface. Hypertext with an even higher prominence rating **430** has an increased font size. A link with the lowest prominence rating **440** is shown in a decreased font size. Thus, the visual cue may consist of changing the font size, font style, color, boldness, underlining, spatial separation or prioritization of the hypertext as well as a combination of these changes.

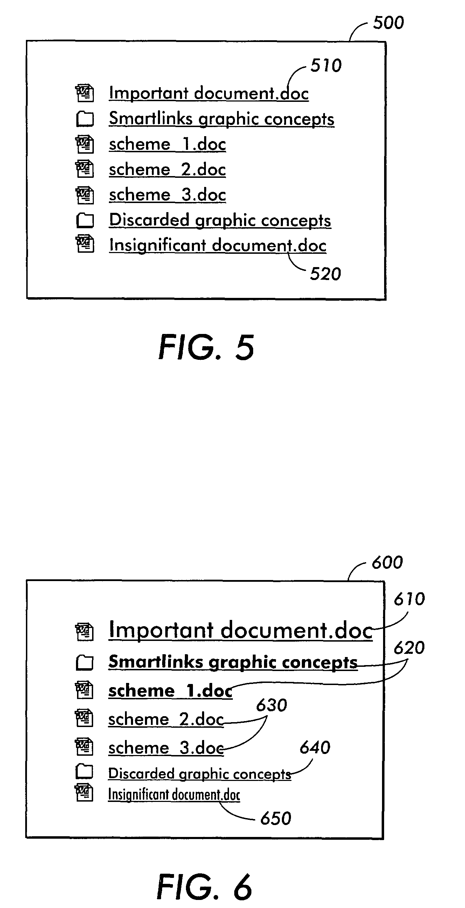

With reference to FIGURE 5, the current invention may display hypertext visually cued to priority based on prominence rating which is based on frequency and recency of access **500**. In this embodiment, the hypertext with the highest prominence rating **510** is placed first in the display list and the other links are displayed according to decreasing prominence rating, with the hypertext of lowest prominence rating **520** last.

FIGURE 6 shows a display screen **600** resulting from a combination of visual cues, including font changes and prioritization of hypertext. The hypertext with the highest prominence rating **610** is the first in a list of links and its font size has been increased. Hypertext that is in a lower category of prominence ratings **620** is next in the list and has been bolded. Links that are in a yet lower prominence rating category **630** are shown next in the list in a typical font size and boldness. Hypertext that is assigned prominence ratings of still lower categories **640, 650** is displayed at the end of the list in decreasing font sizes. As a result, a user can quickly discern between hypertext which is accessed more recently and frequently and that which is not.

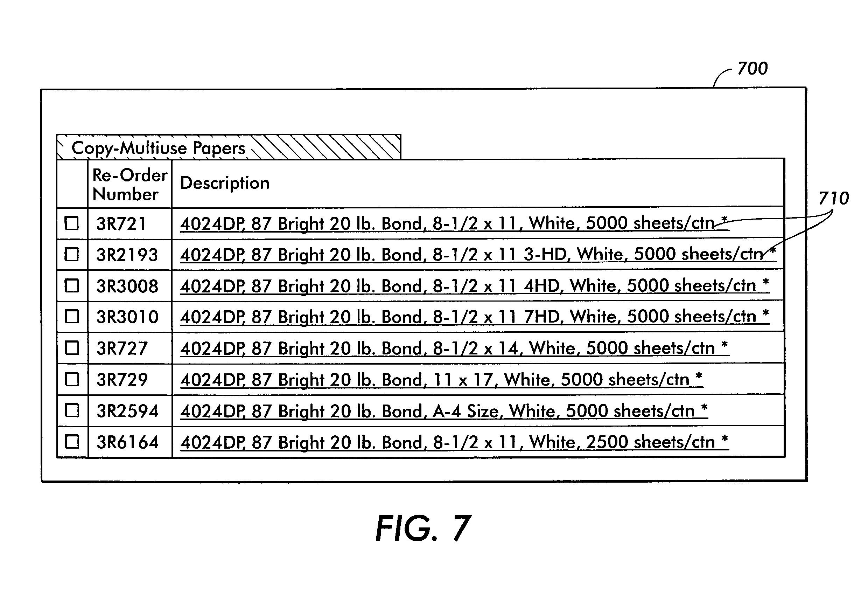

Turning now to FIGURE 7, a display of the prior art **700** is depicted. Many hypertext items **710** are shown in a list pre-determined by someone other than the computer user or system administrator, creating the need for the user to tediously visually sort through the list.

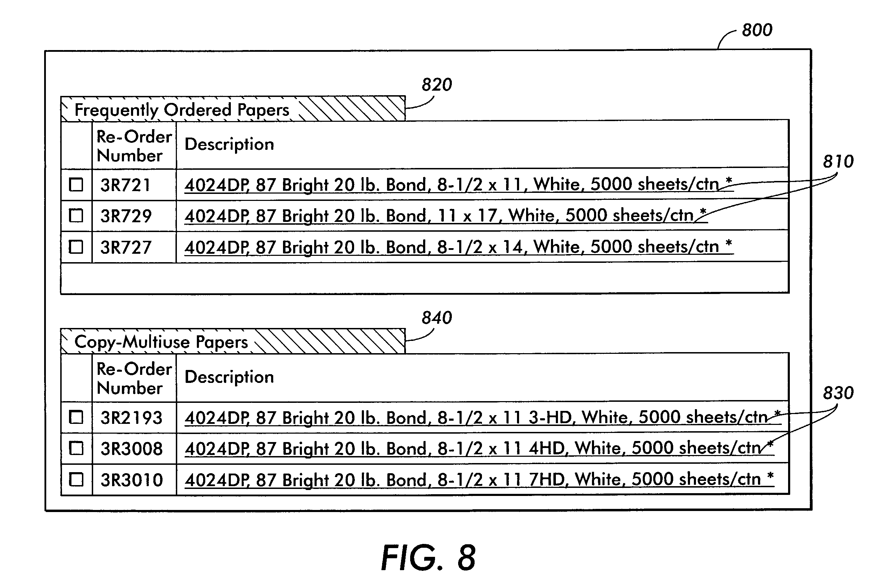

This problem is solved with the embodiment of the invention shown in FIGURE 8. A screen display **800** incorporating a visual cue of spatial separation which is dictated by a prominence rating based on recency and frequency of access eliminates the need for a user to sort through a long list of hypertext. Hypertext in the highest category of prominence rating **810** is placed in one section with a corresponding heading **820**. Hypertext in a lower category of prominence rating **830** is placed in another section of the display with a separate heading **840.**

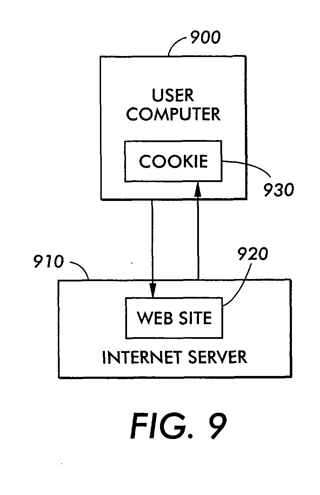

The current invention may also be incorporated into a computer system utilizing the Internet. As FIGURE 9 illustrates, a user computer **900** contacts an Internet server **910** to gain access to a web site **920** using hypertext. The Internet server **910** typically stores a set of data on a local memory, commonly referred to as a cookie **930,** on the user computer **900.** The cookie **930** often contains information deposited each time a web site **920** is accessed, including the date and time of each access. Thus, a calculation of the frequency and recency of access of the web site **920** through the use of the hypertext, similar to the previously described embodiments, is possible. As mentioned above, tracking of frequency and recency may be accomplished in a conventional manner and any known technique may be used to generate and assign the rating. For example, to generate the rating, a look-up table containing a count of frequency of access of each link, a corresponding date of most recent access and the resulting prominence rating may be used. Internet server **910** can access the cookie **930** on subsequent visits by the user to the web site **920,** interpret the data **930** and assign from the data a prominence rating based on frequency and recency of access to the hypertext. The subsequent display of the hypertext on the user computer **900** can then be altered by changing visual cues according to the prominence rating as described in the previous embodiments. It is anticipated for a web browser to be configured to interpret the data in addition to the internet server **910**, thus allowing control of the frequency and recency parameters by either the Internet server administrator or the computer user, or both.

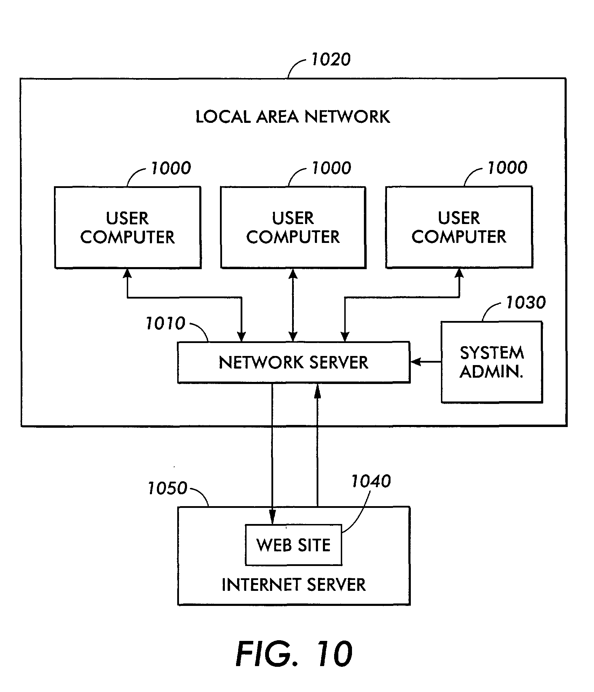

Turning finally to FIGURE 10, an embodiment of a multiple user computer system utilizing the current invention in regard to the Internet is shown. A multiplicity of user computers **1000** is connected to a network server **1010** to form a local area network **1020**. A system administrator **1030** typically retains control over the server **1010** and system settings. When a user computer **1000** accesses a web site **1040,** the communication is instigated through a hypertext link and may pass through the network server **1010** as shown or may bypass the network server **1010.** Once the web site **1040** is accessed, Internet server **1050** contacts the network server **1010** or user computer **1000**, depending on the configuration of the system. The access of a cookie, resultant calculation and assignment of a prominence rating to the hypertext, along with the change of visual cues on the display of the hypertext according to the prominence rating, is essentially the same as described above for FIGURE 9. The basic difference for the purpose of the current invention in regard to FIGURE 10 is that the cookie may be located on or be under the control of the local area network server **1010** instead of the user computer **1000**. As a result, the system administrator **1030** may control the frequency and recency parameters instead of the Internet server administrator or the computer user. As described in the above embodiments, the prominence rating may be based upon the frequency and recency of access of the entire group of users or upon each individual user, thus allowing a display to be customized to the requirements of the group or to the requirements of each individual user.

Another embodiment of the current invention includes a computer apparatus for displaying hypertext based on a prominence rating. The apparatus includes typical system hardware, such as a display and a processor which is connected to the display. A computer program, also known as software, operates on the processor and contains at least one program module to track a hypertext access to a document as described in the prior embodiments. The software also includes a module which assigns a prominence rating to the hypertext based on the tracking, wherein the prominence rating is based on frequency of access by a user and on recency of access by the user. Another module operates to change a visual cue of the hypertext on a display according to the prominence rating.

The software may also be configured to operate on a computer which will connect to the Internet. In such an embodiment, the software includes a module to program the processor to access a set of data stored on a local memory by an Internet server. The software has a module to interpret the set of data and assign a prominence rating to hypertext based on the set of data, wherein the prominence rating is based on frequency of access by a user as shown by the set of data and on recency of access by the user as shown by the set of data. As described above, another module operates to change a visual cue of the hypertext on a display according to the prominence rating.

The invention has been described with reference to the preferred embodiments. Potential modifications and alterations will occur to others upon a reading and understanding of the specification. It is our intention to include all such modifications and alterations insofar as they come within the scope of the appended claims, or the equivalents thereof.

## Claims

1. A method of displaying hypertext, comprising the steps of:
tracking a hypertext access to a document;
assigning a prominence rating to the hypertext based on the tracking, wherein the prominence rating is based on frequency of access by a user, and on recency of access by the user; and
changing a visual cue of the hypertext on a display according to the prominence rating.

2. A method of displaying hypertext, comprising the steps of:
accessing a set of data stored on a local memory by an Internet server;
interpreting the set of data;
assigning a prominence rating to hypertext based on the set of data, wherein the prominence rating is based on frequency of access by a user as shown by the set of data, and on recency of access by the user as shown by the set of data; and
changing a visual cue of the hypertext on a display according to the prominence rating.

3. A method of displaying hypertext according to claim 2, wherein the set of data stored on a local memory by the Internet server is located on a user's computer.

4. A method of displaying hypertext according to claim 2, wherein the set of data stored on a local memory by the Internet server is located on a local area network server.

5. A computer apparatus for displaying hypertext based on a prominence rating, comprising:
a display;
a processor connected to the display; and
software means operative on the processor for:
tracking a hypertext access to a document;
assigning a prominence rating to the hypertext based on the tracking, wherein the prominence rating is based on frequency of access by a user, and on recency of access by the user; and
changing a visual cue of the hypertext on a display according to the prominence rating.

6. A computer apparatus for displaying hypertext according to claim 5, where the software means is further operative on the processor for:
accessing a set of data stored on a local memory by an Internet server;
interpreting the set of data; and
assigning a prominence rating to hypertext based on the set of data, wherein the prominence rating is based on frequency of access by a user as shown by the set of data, and on recency of access by the user as shown by the set of data.
